# EUROPÄISCHE PATENTSCHRIFT

(11) **EP 1 317 790 B1**
(45) Veröffentlichungstag und Bekanntmachung des Hinweises auf die Patenterteilung: **21.07.2004**
(21) Anmeldenummer: 01984677.3
(22) Anmeldetag: 11.09.2001
(51) Int. Cl.: H02K 9/19

(54) **FLÜSSIGKEITSGEKÜHLTER ELEKTROMOTOR**
LIQUID-COOLED ELECTROMOTOR
MOTEUR ELECTRIQUE REFROIDI PAR LIQUIDE

(30) Priorität: 14.09.2000 DE 10045424
(43) Veröffentlichungstag der Anmeldung: 11.06.2003
(73) Patentinhaber: ELIN EBG Motoren GmbH, 8160 Weiz (AT)
(72) Erfinder: SCHULZ, Rudolf, A-1200 Wien (AT); FRICKH, Markus, A-5440 Golling (AT); HÖRZ, Ewald, A-8160 Weiz (AT)
(74) Vertreter: VA TECH Patente GmbH & Co
(86) Internationale Anmeldenummer: PCT/EP2001/010474
(87) Internationale Veröffentlichungsnummer: WO 2002/023699

(56) Entgegenhaltungen:
- EP-A- 0 447 215
- US-A- 3 371 613
- US-A- 4 700 092

## Beschreibung

Die vorliegende Erfindung betrifft einen flüssigkeitsgekühlten Elektromotor mit einer Motorwelle, zwei an den Stirnseiten des Motorgehäuses angebrachten Lagerschildern, die zu jeder Seite zumindest ein Lager tragen in denen die Motorwelle drehbar gelagert ist, sowie mit zumindest einer rotierenden Hydraulikpumpe, beispielsweise einer Axialkolben-, Flügel- oder Zahnradpumpe, deren Antriebswelle mittels einer Kupplung mit der Motorwelle verbunden ist und die vom Elektromotor angetrieben wird, sowie ein entsprechendes Verfahren.

In EP 0 447 215 A2 wird ein Elektromotor gemäß dem Oberbegriff der vorliegenden Erfindung offenbart. In US 5 181 837 und in US 5 320 501 wird ein Elektromotor gezeigt, der an einer oder an beiden Seiten mit einer Hydraulikpumpe verbunden ist und diese antreibt. Die Hydraulikflüssigkeit wird dabei entweder über eine Einlassöffnung am Gehäuse des Motors oder über ein Lagerschild zugeführt und durchströmt das gesamte Gehäuse, umgibt somit auch den Stator und Rotor des Elektromotors, und schmiert die Lagerstellen und die Verbindung zwischen Motorwelle und Pumpenwelle. Die Pumpen saugen bei diesen Ausführungen die Hydraulikflüssigkeit direkt aus dem Motorraum an.
Das Motorgehäuse und die Lagerschilder sind für einen speziellen Typ von Pumpe ausgelegt, kann also nur als eine fixe Kombination von Motor mit Pumpe verwendet werden. Da die Hydraulikflüssigkeit direkt mit dem Elektromotor in Berührung kommt, muss dieser spezielle konstruktive und elektrische Anforderungen erfüllen. Zum einen muss er natürlich elektrisch isoliert ausgeführt sein und zum anderen muss er das ungehinderte Durchströmen der Hydraulikflüssigkeit gewährleisten, was direkt einsichtlich den Aufwand und die Kosten bei der Herstellung erhöht.
Außerdem erhöhen sich natürlich die Verluste des Elektromotors durch einen wesentlich höheren Drehwiderstand, da dieser vollständig in der Hydraulikflüssigkeit laufen muss.

Das Ziel der vorliegenden Erfindung ist es einen Elektromotor anzugeben, der eine effiziente Kühlung der Wicklungen des Motors besitzt und der gleichzeitig auch die Kühlung der Lager sicherstellt.

Die Aufgabe wurde erfindungsgemäß durch eine Vorrichtung nach Anspruch 1 und ein Verfahren nach Anspruch 28 gelöst. Der Mantel des Motorgehäuses ist zur Aufnahme einer Kühlflüssigkeit zumindest teilweise hohl ausgebildet und einen Mantelhohlraum und in den Lagerschildern ist zumindest jeweils ein Verbindungskanal für die Zufuhr von Kühlflüssigkeit vom Mantelhohlraum zu den Lagern vorgesehen.

Dadurch, dass die Kühlflüssigkeit vom Mantelhohlraum über die Verbindungskanäle zu den Lagerstellen geführt wird, erhält man einen Kühlkreislauf, der den Elektromotor kühlt und gleichzeitig auch die Lagerstellen kühlen kann. Dieser Kühlkreislauf kann vollkommen abgekoppelt von Hydraulikkreisläufen der Hydraulikpumpen betrieben werden, wodurch eine konstante Kühlung unabhängig von diesen anderen Hydraulikkreisläufen erreicht werden kann. Insbesondere ist man dadurch unabhängig vom momentanen Fördervolumen der an den Elektromotor angebundenen Hydraulikpumpen. Außerdem ist es denkbar, dass bei dieser Ausführung der Kühlkreislauf auch bei einem stehenden Elektromotor aufrecht erhalten wird.

Eine besonders einfache Ausführungsform ergibt sich, wenn eine mit einem Kühlmittelreservoir verbundene Einlassöffnung für Kühlflüssigkeit am zylindrischen Teil des Motorgehäuses vorgesehen ist, die mit dem Mantelhohlraum verbunden ist und wenn eine mit einem Kühlmittelreservoir verbundene Auslassöffnung für Kühlflüssigkeit am zylindrischen Teil des Motorgehäuses angeordnet ist und mit dem Mantelhohlraum verbunden ist. Die Kühlflüssigkeit kann so zentral zu- und abgeführt werden und es ergibt sich eine leichte Zugänglichkeit zur Einlass- und Auslassöffnung.
Eine einfache Alternative dazu ist in zumindest einem Lagerschild zumindest eine mit dem Verbindungskanal verbundene Ein- und/oder Auslassöffnung für Kühlflüssigkeit anzuordnen.

Dazu ist es vorteilhaft im Mantelhohlraum zumindest drei von der Kühlflüssigkeit durchströmbare Kanäle vorzusehen. Ganz besonders vorteilhaft ist es, die einzelnen Kanäle im Mantelhohlraum nebeneinander anzuordnen und nur durch Trennwände voneinander zu trennen, sodass im Wesentlichen der gesamte Mantelhohlraum von Kühlflüssigkeit durchströmbar ist. Dadurch, dass der gesamte Mantelhohlraum von Kühlflüssigkeit durchströmt wird, ergibt sich eine maximale Kühlleistung und der Elektromotor wird über den ganzen Umfang gleichmäßig gekühlt.

Eine sehr vorteilhafte Ausführungsform erhält man, wenn in serieller Weise zuerst ein Lagerschild, dann ein Teil des Mantelhohlraumes, dann das zweite Lagerschild und im Anschluss daran der Rest des Mantelhohlraumes von der Kühlflüssigkeit durchströmt wird, da diese Ausführungsvariante konstruktiv sehr einfach umgesetzt werden kann.

Wenn der Innenraum des Motorgehäuses, in dem der Elektromotor angeordnet ist, gegenüber der Kühlflüssigkeit mittels einer Dichtung, vorzugsweise einer berührungslosen Dichtung, abgedichtet ist, stellt man sicher, dass der Motorraum nicht von der Kühlflüssigkeit durchströmt wird, der Elektromotor folglich zur Gänze in Luft läuft. Dadurch ergibt sich zwangsläufig ein höherer Wirkungsgrad gegenüber einem Elektromotor der beispielsweise in der Kühlflüssigkeit laufen würde, da der Drehwiderstand wesentlich geringer ist. Außerdem können handelsübliche Motorbauteile verwendet werden, da diese nicht speziell gegenüber der Kühlflüssigkeit isoliert werden müssen, was die Kosten eines erfindungsgemäßen Elektromotors natürlich wesentlich verringert.

Eine besonders kompakte Ausführungsform ergibt sich, wenn die Motorwelle an zumindest einem ihrer Enden einen Teil einer Kupplung aufweist, über den die Antriebswelle der Hydraulikpumpe mit der Motorwelle verbindbar ist und das Lagerschild zumindest den auf der Motorwelle befindlichen Teil der Kupplung umgibt und die dem Motorgehäuse abgewandte Stirnseite des Lagerschildes einen Flansch aufweist. Damit schafft man die Voraussetzung, um auf sehr einfache Weise eine Hydraulikpumpe mit dem Elektromotor zu verbinden.

Ein weiterer konstruktiver Vorteil ergibt sich, wenn das Lagerschild einer Seite des Elektromotors, an der keine Hydraulikpumpe angeflanscht ist, mit einer Abschlussplatte flüssigkeitsdicht verschlossen ist, da man dann auf beiden Seiten des Motors das selbe Lagerschild verwenden kann, was zusätzlich noch die Herstellungskosten verringert.

Die Kühlflüssigkeit weist eine schmierende Wirkung auf, da sie dann direkt auch zur Schmierung hergenommen werden kann. Ein konstruktiver Vorteil ergibt sich daraus, wenn die Kupplungsverbindungen zwischen Elektromotorwelle und Antriebswelle der Hydraulikpumpen und die Lager der Elektromotorwelle so angeordnet und ausgeführt sind, dass sie durch die durchfließende Kühlflüssigkeit schmierbar sind. Es müssen also keine zusätzlichen konstruktiven Vorkehrungen getroffen werden, um die Kupplungen und die Lager zu schmieren. Insbesondere sind keine fettgeschmierten Lager erforderlich und es kann die Wartung, hinsichtlich der Schmierung, der Lager und/oder der Kupplung entfallen.

Eine besonders vorteilhafte Ausführung ergibt sich, wenn die Adapterringe und die Kupplungen tauschbar sind und somit verschiedene Typen von Hydraulikpumpen anpassbar sind. Damit ist es möglich ohne konstruktive Änderungen am Elektromotor vorzunehmen, durch einfaches Austauschen zweier einfacher und billiger Bauteile, unterschiedliche Typen von Hydraulikpumpen, auch von verschiedenen Herstellern, am selben Elektromotor zu betreiben, wodurch man bei der Wahl der Hydraulikpumpe nicht mehr an einen bestimmten Hersteller oder Typ gebunden ist, sondern flexibel nach Preis und Einsatzzweck wählen kann. Eine besonders einfache Kupplung erhält man, wenn die Kupplung als Verzahnungshülse ausgebildet sind. Diese sind standardisiert, besitzen eine geringe Baugröße, sind einfach herstellbar, leicht tauschbar und im Vergleich zu anderen Kupplungstypen, wie z.B. eine elastische Kupplung, sehr günstig.

Als vorteilhaft stellt es sich heraus, wenn vor dem Eintritt in den Mantelhohlraum des Motorgehäuses eine Einrichtung zur Kühlung der Kühlflüssigkeit, beispielsweise ein Öl-/Wasserwärmetauscher, und nach dem Austritt aus dem Mantelhohlraum eine Einrichtung zur Filterung der Kühlflüssigkeit vorgesehen ist. Durch die Filterung werden mögliche Verunreinigungen aus der Kühlflüssigkeit entfernt, wodurch zum Beispiel eine Verblockung der Verbindungskanäle im Elektromotor verhindert werden kann. Durch eine externe Kühlung der Kühlflüssigkeit erhält man einen wesentlich effektiveren Kühlkreislauf und in direkter Folge eine bessere Kühlung des Elektromotors.

Besonders günstig ist es, wenn die Hydraulikflüssigkeit gleichzeitig als Kühlflüssigkeit verwendbar ist, wodurch sich die Kosten des Betriebes eines solchen Aggregates vermindern. Dieser Effekt wird noch weiter unterstützt, wenn die Kühl- und die Hydraulikflüssigkeit aus einem gemeinsamen Flüssigkeitsreservoir entnehmbar sind.

Wird eine Hydraulikpumpe zur Aufrechterhaltung des zur Kühlung und Schmierung des Elektromotors notwendigen Hydraulikkreislaufes an einer Seite des Elektromotors angeflanscht und von diesem angetrieben, ergibt sich eine sehr günstige Ausführungsform, da kein eigener Elektromotor zum Antrieb der Hydraulikpumpe des Kühlkreislaufes benötigt wird. Wird im Gegensatz dazu eine separate Hydraulikpumpe mit einem eigenen Antrieb zur Aufrechterhaltung des zur Kühlung und Schmierung des Elektromotors notwendigen Hydraulikkreislaufes vorgesehen, so kann der Kühlkreislauf unabhängig vom Elektromotor aufrecht erhalten werden, man kann beispielsweise also auch bei ruhendem Elektromotor kühlen, und man kann die gesamte Elektromotorleistung für die eigentlichen Hydraulikkreisläufe verwenden.

Besonders vorteilhaft ist es an den Lagerschildern Füße vorzusehen, die den Elektromotor und die Hydraulikpumpen tragen und mit welchen der Elektromotor an einer Unterlage befestigbar ist, da so das gesamte Aggregat, also Elektromotor und angeflanschte Hydraulikpumpen, als Gesamteinheit steifer wird. Damit können eventuell auftretende Schwingungen reduziert werden und gleichzeitig auch die Geräuschentwicklung verringert werden.

Die Erfindung wird anhand der beispielhaften, schematischen und nicht einschränkenden Darstellungen Fig. 1 bis Fig. 5 beschrieben. Die Figuren zeigen:
Fig. 1 eine perspektivische Schnitt-Darstellung eines erfindungsgemäßen Elektromotors.
Fig. 2 eine vergrößerte Darstellung einer Lagerstelle eines erfindungsgemäßen Elektromotors.
Fig. 3 und Fig. 4 jeweils eine schematische Darstellung eines Kühlkreislaufes.
Fig. 5 eine schematische Darstellung des aufgerollten Motormantels.

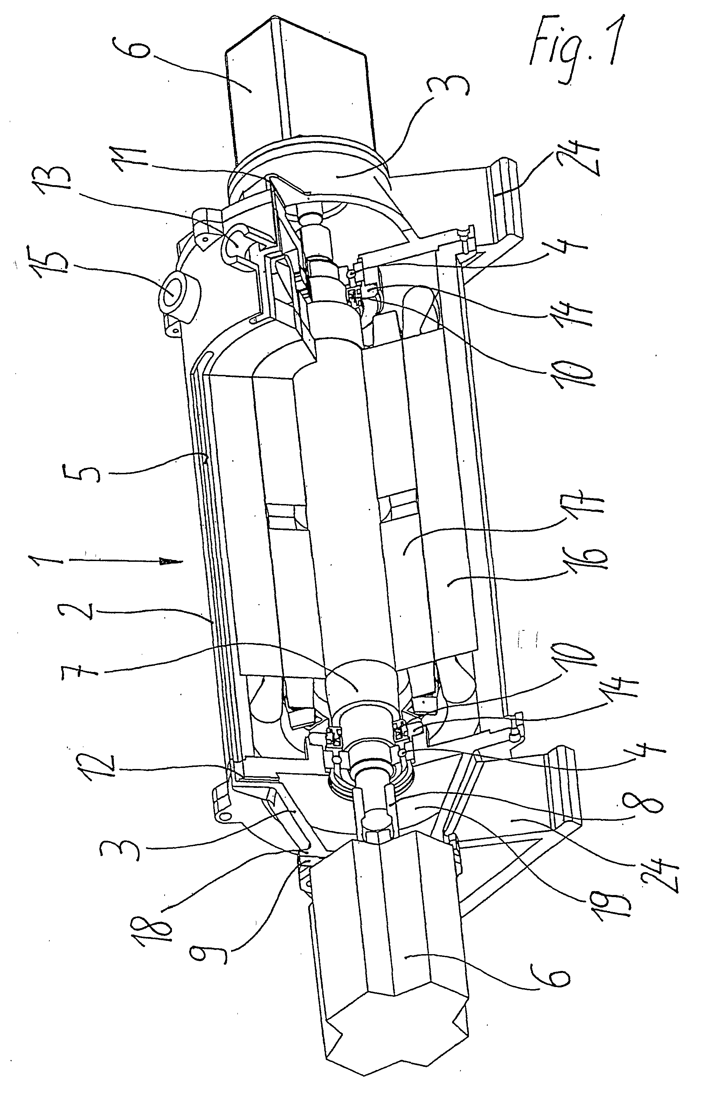

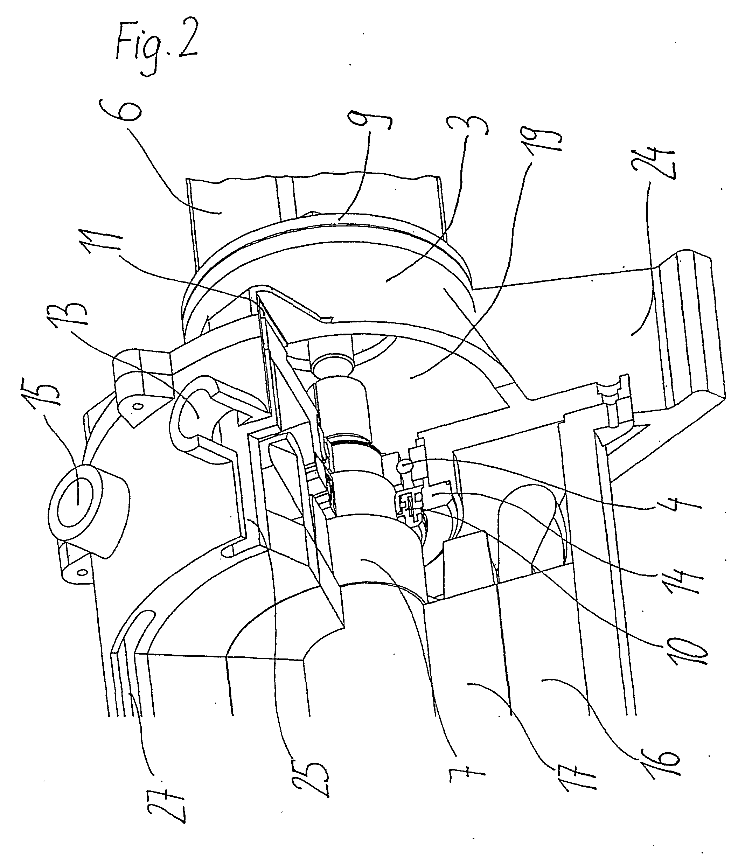

Die Erfindung wird im folgenden anhand der Fig. 1 beschrieben. Die vergrößerte Darstellung in Fig. 2 dient zur besseren Anschaulichkeit.

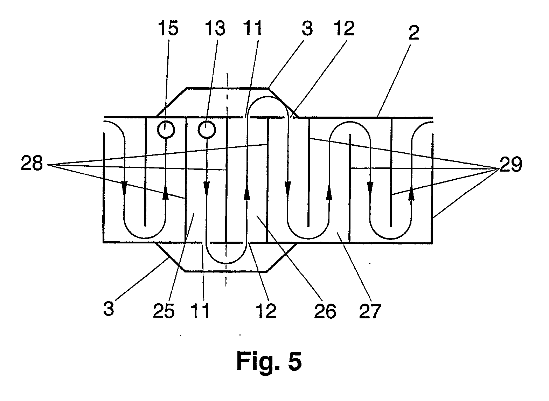

Der Elektromotor 1 mit einem Stator 16, der an der Innenseite des Motorgehäuses 2 befestigt ist, und einem Rotor 17, der auf der Motorwelle 7 befestigt ist, befindet sich in einem Motorgehäuse 2. An jeder Seite des Motorgehäuses 2 schließt stirnseitig ein Lagerschild 3 an, in dem jeweils ein Lager 4 für die Motorwelle 7 gehalten wird. Die Lager 4 sind jeweils durch einen Lagerhalter 14 in den Lagerschildern 3 fixiert. Die Lagerschilder 3 schließen stirnseitig mit einem Flansch 18 ab. An diese Flansche 18 können mittels unterschiedlicher Adapterringe 9 verschiedene Typen von Hydraulikpumpen 6 an den Elektromotor 1 angeflanscht werden. Die zu beiden Seiten des Elektromotors 1 angeflanschten Hydraulikpumpen 6 sind jeweils über eine Kupplung 8 mit der Motorwelle 7 verbunden und werden daher direkt vom Elektromotor 1 angetrieben. Im vorliegenden Ausführungsbeispiel ist die Kupplung 8 als Verzahnungshülse ausgeführt.
Zur Kühlung des Elektromotors 1 ist der Mantel des Motorgehäuses 2 hohl ausgeführt und in mehrere durchströmbare Kanäle unterteilt. Dieser Mantelhohlraum 5 dient zur Aufnahme der Kühlflüssigkeit, die gleichzeitig auch als Schmiermittel für die Lager 4 und gegebenenfalls auch für die Kupplungen 8 dient. Die Kühlflüssigkeit wird über eine Einlassöffnung 13 in den Mantelhohlraum 5 zugeführt. Auf beiden Seiten des Elektromotors 1 befindet sich im zugehörigen Lagerschild 3 ein Verbindungskanal 11 für Zufuhr von Kühlflüssigkeit in das Lagerschild 3 und ein Verbindungskanal 12 für die Abfuhr von Kühlflüssigkeit vom Lagerschild 3. Die Lagerschildinnenräume 19 werden dabei vollständig mit Kühlflüssigkeit ausgefüllt, die Lager 4 und die Kupplungen 8 werden damit von Kühlflüssigkeit umgeben und schmiert und kühlt diese gleichzeitig. Die Kühlflüssigkeit wird im Motorgehäuse 2 über ein in Fig. 5 dargestelltes Kanalsystem geführt.
Der Innenraum des Motorgehäuses 2 selbst wird dabei durch Dichtungen 10, die sich in den Lagerhaltern 14 befinden, gegenüber der Kühlflüssigkeit abgedichtet und es wird sichergestellt, dass keine Kühlflüssigkeit in das Motorgehäuse 2 eindringen kann. Die angeflanschten Hydraulikpumpen 6 müssen ebenfalls flüssigkeitsdicht gegenüber den Lageschildinnenräumen 19 abgedichtet sein. Weiters müssen die Verbindungen zwischen den Flanschen 18 der Lagerschilder 3 und den Adapterringen 9, die Verbindungen zwischen den Adapterringen 9 und den Hydraulikpumpen 6 sowie die Verbindungen zwischen Lagerschildern 3 und Motorgehäuse 2 flüssigkeitsdicht abgedichtet sein.
Die Lagerschilder 3 sind in diesem Beispiel als Gussteile ausgeführt und bilden gleichzeitig auch die Füße 24, die den Elektromotor 1 und die Hydraulikpumpen 6 tragen und mittels derer das Motor-Pumpen-Aggregat an einer Unterlage befestigt wird.

Die obige Beschreibung eines erfindungsgemäßen Elektromotors ist in keiner Weise einschränkend. Insbesondere ist es möglich die Form, Anzahl und Position der Verbindungskanäle konstruktiv anders zu gestalten, oder einen anderen Kupplungstyp zu verwenden, wie beispielsweise eine Passfederverbindung. Außerdem ist die maximale Anzahl der an einer oder an beiden Seiten des Elektromotors anflanschbaren Hydraulikpumpen nur von der Leistung des Elektromotors abhängig.

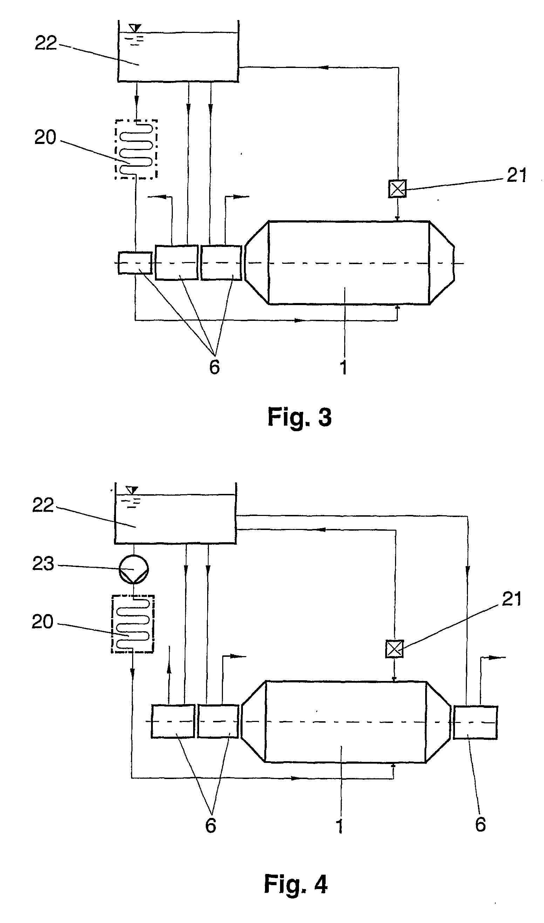

Der Kühlkreislauf des Elektromotors 1 wird, wie in Fig. 3 gezeigt, durch eine der Hydraulikpumpen 6, die an den Elektromotor 1 angeflanscht ist und von diesem angetrieben wird, aufrecht erhalten. Die Kühlflüssigkeit wird dabei von einem gemeinsamen Flüssigkeitsreservoir 22 angesaugt und wird über einen Wärmetauscher 20, zur Kühlung der Kühlflüssigkeit, in den Elektromotor 1 gefördert. Dort gelangt die Kühlflüssigkeit wie oben beschrieben zur Schmierung und Kühlung an die Lagerstellen. Danach wird die Kühlflüssigkeit über einen Filter 21 wieder zurück in das Flüssigkeitsreservoir 22 gefördert. Dieser Kühlkreislauf ist konstruktiv und fördermengenmäßig so ausgeführt, dass der Elektromotor 1 damit im Betrieb ohne zusätzliche Kühleinrichtungen gekühlt werden kann.

In Fig. 4 wird der Kühlkreislauf nicht durch eine der an den Elektromotor 1 angeflanschten Hydraulikpumpen 6, sondern über ein separates Motor-Hydraulikpumpen-Aggregat 23 betrieben. Der Weg der Kühlflüssigkeit führt wiederum vom Flüssigkeitsreservoir 22 über einen Wärmetauscher 20 in den Elektromotor 1 und über einen Filter 21 wieder zurück in das Flüssigkeitsreservoir 22.

Der beschriebene Kühlkreislauf ist nicht einschränkend. Insbesondere können zusätzliche oder andere Einrichtungen zum Kühlen oder Filtern der Kühlflüssigkeit vorgesehen werden, oder es können für die Hydraulikkreisläufe und für den Kühlkreislauf unterschiedliche Flüssigkeiten und damit zwangsweise auch unterschiedliche Flüssigkeitsreservoirs verwendet werden.

In Fig. 5 wird anhand eines Beispieles die Führung der Hydraulikflüssigkeit im Mantelhohlraum 5 gezeigt. Die Hydraulikflüssigkeit gelangt dabei am Ende einer Seite des Motorgehäuses 2 über eine Einlassöffnung 13 in einen ersten durch Trennwände 28 abgetrennten axialen Kanal 25, den sie über die gesamte axiale Länge des Motorgehäuses 2 durchströmt. An der gegenüberliegenden Seite des Motorgehäuses 2 gelangt die Hydraulikflüssigkeit über einen Verbindungskanal 11 in das auf dieser Seite angeflanschte Lagerschild 3 und füllt den Lagerschildinnenraum vollständig aus. Die Hydraulikflüssigkeit wird über einen zweiten Verbindungskanal 12 wieder vom Lagerschild 3 abgeführt, durchströmt über die gesamte axiale Länge des Motorgehäuses 2 einen zweiten durch Trennwände 28 abgetrennten axialen Kanal 26 und gelangt an der gegenüberliegenden Seite des Motorgehäuses 2 über einen Verbindungskanal 11 in das auf dieser Seite angeflanschte Lagerschild 3 und füllt wiederum den Lagerschildinnenraum vollständig aus. Die Hydraulikflüssigkeit wird über einen zweiten Verbindungskanal 12 wieder vom Lagerschild 3 abgeführt und gelangt in ein durchströmbares Kanalsystem 27 in dem die Hydraulikflüssigkeit durch Umlenkwände 29 mehrfach in axialer Richtung umgelenkt wird und so den gesamten restlichen Mantelhohlraum 5 durchströmt. Am Ende dieses Kanalsystems 27 befindet sich eine Auslassöffnung 15 durch die die Hydraulikflüssigkeit abgeführt und in weiterer Folge wie oben beschrieben zum Flüssigkeitsreservoir 22 zurückbefördert wird.

Bei diesem nicht einschränkenden Beispiel durchströmt die Hydraulikflüssigkeit also hintereinander die Lagerschilder 3 und den gesamten Mantel des Motorgehäuses 2. Es wäre allerdings auch denkbar die Hydraulikflüssigkeit gleichzeitig durch beide Lagerschilder 3 zu führen, die Ein- 13 und Auslassöffnungen 15 anders anzuordnen, oder mehrere Ein-13 und Auslassöffnungen 15 vorzusehen. Weiters ist es denkbar die Hydraulikflüssigkeit im Kanalsystem 27 anders zu führen, zum Beispiel in axialer und/oder radialer Richtung. Weiters ist es natürlich im Bereich der Erfindung nur einen Teil des Mantels des Motorgehäuses 2 hohl auszubilden wodurch natürlich auch nur ein Teil des Mantels des Motorgehäuses 2 von Hydraulikflüssigkeit durchströmt werden würde. Die Hydraulikflüssigkeit kann also beliebig durch den Mantel des Motorgehäuses 2 und den Lagerschildern geführt werden, wobei jeweils die Ein- 13 und Auslassöffnungen 15, die Lage der Verbindungskanäle 11, 12 in den Lagerschildern 3, sowie die Kanäle 25, 26 und 27 im Mantelhohlraum 5 angepasst werden müssen.

## Patentansprüche

1. Ein flüssigkeitsgekühlter Elektromotor (1) mit einer Motorwelle (7), zwei an den Stirnseiten des Motorgehäuses (2) angebrachten Lagerschildem (3), die zu jeder Seite zumindest ein Lager (4) tragen in denen die Motorwelle (7) drehbar gelagert ist, sowie mit zumindest einer rotierenden Hydraulikpumpe (6), beispielsweise einer Axialkolben-, Radialkolben-, Flügel- oder Zahnradpumpe, deren Antriebswelle mittels einer Kupplung (8) mit der Motorwelle (7) verbunden ist und die vom Elektromotor (1) angetrieben wird, wobei der Mantel des Motorgehäuses (2) zur Aufnahme einer Kühlflüssigkeit zumindest teilweise hohl ausgebildet ist und einen Mantelhohlraum (5) bildet, wobei in den Lagerschildern (3) zumindest jeweils ein Verbindungskanal (11) für die Zufuhr von Kühlflüssigkeit vom Mantelhohlraum (5) zu den Lagern (4) zur Kühlung und Schmierung der Lager (4) vorgesehen ist, **dadurch gekennzeichnet dass** die angeflanschte Hydraulikpumpe (6) flüssigkeitsdicht gegenüber dem Lagerschildinnenraum (19) abgedichtet ist.

2. Elektromotor nach Anspruch 1, **dadurch gekennzeichnet, dass** auf jeder Seite des Elektromotors (1) zumindest eine rotierende Hydraulikpumpe (6), beispielsweise eine Axialkolben-, Radialkolben-, Flügel- oder Zahnradpumpe, mit der Motorwelle (7) verbunden angeordnet ist.

3. Elektromotor nach Anspruch 1 oder 2, **dadurch gekennzeichnet, dass** am zylindrischen Teil des Motorgehäuses (2) zumindest eine mit einem Kühlmittelreservoir (22) verbundene Ein- und/oder Auslassöffnung (13) für Kühlflüssigkeit vorgesehen ist, die mit dem Mantelhohlraum (5) verbunden ist.

4. Elektromotor nach Anspruch 1,2 oder 3, **dadurch gekennzeichnet, dass** in zumindest einem Lagerschild (3) zumindest eine Ein- und/oder Auslassöffnung (15) für Kühlflüssigkeit vorgesehen ist.

5. Elektromotor nach Anspruch 3 oder 4, **dadurch gekennzeichnet, dass** im Mantelhohlraum (5) zumindest drei von der Kühlflüssigkeit durchströmbare Kanäle (25, 26, 27) vorgesehen sind.

6. Elektromotor nach Anspruch 5, **dadurch gekennzeichnet, dass** die einzelnen Kanäle (25, 26, 27) im Mantelhohlraum (5) nebeneinander angeordnet sind und nur durch Trennwände (28) voneinander getrennt sind, sodass im Wesentlichen der gesamte Mantelhohlraum (5) von Kühlflüssigkeit durchströmbar ist.

7. Elektromotor nach Anspruch 5 oder 6, **dadurch gekennzeichnet, dass** in beiden Lagerschildern (3) zumindest ein Verbindungskanal (12) für die Abfuhr von Kühlflüssigkeit von den Lagern (4) zum Mantelhohlraum (5) vorgesehen ist.

8. Elektromotor nach Anspruch 7, **dadurch gekennzeichnet, dass** ein erster durch Trennwände (28) abgetrennter axial verlaufender Kanal (25) im Mantelhohlraum (5) mit der Einlassöffnung (13) verbunden ist und dass dieser Kanal (25) auf einer Seite des Elektromotors (1) fluchtend mit den Verbindungskanälen (11) zur Kühlmittelzufuhr zu dem zugehörigen Lagerschild (3) angeordnet ist.

9. Elektromotor nach Anspruch 8, **dadurch gekennzeichnet, dass** ein zweiter durch Trennwände (28) abgetrennter axial verlaufender Kanal (26) unmittelbar neben dem ersten abgetrennten Kanal (25) angeordnet ist, dass dieser Kanal (26) auf der einen Seite des Elektromotors (1), an der der erste Kanal (25) in das zugehörige Lagerschild (3) mündet, fluchtend mit den Verbindungskanälen (12) zur Kühlmittelabfuhr von dem zugehörigen Lagerschild (3) angeordnet und verbunden ist und dass dieser Kanal (26) auf der gegenüberliegenden Seite des Elektromotors (1) fluchtend mit den Verbindungskanälen (11) zur Kühlmittelzufuhr zu dem anderen zugehörigen Lagerschild (3) angeordnet und verbunden ist.

10. Elektromotor nach Anspruch 9, **dadurch gekennzeichnet, dass** weitere axial verlaufende, nebeneinander angeordnete Kanäle (27) nacheinander miteinander in Verbindung stehen, dass in zumindest einem dieser Kanäle (27) die Hydraulikflüssigkeit durch Umlenkwände (29) umlenkbar ist, dass einer dieser Kanäle (27) unmittelbar neben dem zweiten abgetrennten Kanal (26) angeordnet ist, dass dieser Kanal (27) auf der einen Seite des Elektromotors (1), an der der zweite abgetrennte Kanal (26) in das zugehörige Lagerschild (3) mündet, fluchtend mit den Verbindungskanälen (12) zur Kühlmittelabfuhr von dem zugehörigen Lagerschild (3) angeordnet und verbunden ist, und dass der letzte dieser Kanäle (27) unmittelbar neben dem ersten abgetrennten Kanal (25) angeordnet ist und mit der Auslassöffnung (15) verbunden ist.

11. Elektromotor nach einem der Ansprüche 1 bis 10, **dadurch gekennzeichnet, dass** die Kühlkanäle (25, 26, 27) so angeordnet und miteinander verbunden sind, dass sich entlang des Mantels eine mäanderförmige Kühlflüssigkeitsströmung ergibt.

12. Elektromotor nach einem der Ansprüche 1 bis 11, **dadurch gekennzeichnet, dass** die Kühlkanäle (25, 26, 27) so angeordnet und miteinander verbunden sind, dass sich bis auf eine Umlenkung eine im Wesentlichen axial verlaufende Kühlflüssigkeitsströmung ergibt.

13. Elektromotor nach einem der Ansprüche 1 bis 12, **dadurch gekennzeichnet, dass** die Verbindungskanäle (11, 12) an der dem Motorgehäuse (2) abgewandten Seite der Lager (4) in den Lagerschildinnenraum (19) münden.

14. Elektromotor nach Anspruch 1 bis 13, **dadurch gekennzeichnet, dass** der Innenraum des Motorgehäuses (2), in dem die Wicklungen des Elektromotors (1) angeordnet sind, gegenüber der Kühlflüssigkeit mittels einer Dichtung (10), vorzugsweise einer berührungslosen Dichtung, abgedichtet ist.

15. Elektromotor nach Anspruch 1 bis 14, **dadurch gekennzeichnet, dass** das einstückige Lagerschild (3) zumindest den auf der Motorwelle (7) befindlichen Teil der Kupplung (8) umgibt und die dem Motorgehäuse (2) abgewandte Stirnseite des Lagerschildes (3) einen Flansch (18) aufweist.

16. Elektromotor nach Anspruch 1 bis 15, **dadurch gekennzeichnet, dass** das Lagerschild (3) einer Seite des Elektromotors (1), an der keine Hydraulikpumpe (6) angeflanscht ist, mit einer Abschlussplatte flüssigkeitsdicht verschlossen ist.

17. Elektromotor nach einem der Ansprüche 1 bis 16, **dadurch gekennzeichnet, dass** die Kühlflüssigkeit ein Mittel zur Verringerung des Reibungskoeffizienten aufweist.

18. Elektromotor nach Anspruch 17, **dadurch gekennzeichnet, dass** die Kupplungsverbindungen (8) zwischen Elektromotorwelle (7) und Antriebswelle der Hydraulikpumpen (6) und die Lager (4) der Elektromotorwelle (7) so angeordnet und ausgeführt sind, dass sie durch die durchfließende Kühlflüssigkeit schmierbar sind.

19. Elektromotor nach einem der Ansprüche 1 bis 18, **dadurch gekennzeichnet, dass** die Hydraulikpumpe (6) über einen Adapterring (9) mit dem Lagerschild (3) verbunden ist.

20. Elektromotor nach einem der Ansprüche 1 bis 19, **dadurch gekennzeichnet, dass** die Adapterringe (9) und die Kupplungen (8) tauschbar sind und an verschiedene Typen von Hydraulikpumpen (6) anpassbar sind.

21. Elektromotor nach Anspruch 1 bis 20, **dadurch gekennzeichnet, dass** die Kupplungen (8) als Verzahnungshülsen ausgebildet sind.

22. Elektromotor nach einem der Ansprüche 1 bis 21, **dadurch gekennzeichnet, dass** vor dem Eintritt in den Mantelhohlraum (5) des Motorgehäuses (2) eine Einrichtung zur Kühlung (20) der Kühlflüssigkeit, beispielsweise ein Öl-/Wasserwärmetauscher, und nach dem Austritt aus dem Mantelhohlraum (5) eine Einrichtung zur Filterung (21) der Kühlflüssigkeit vorgesehen ist.

23. Elektromotor nach einem der Ansprüche 1 bis 22, **dadurch gekennzeichnet, dass** die Hydraulikflüssigkeit gleichzeitig als Kühlflüssigkeit verwendbar ist.

24. Elektromotor nach Anspruch 23, **dadurch gekennzeichnet, dass** die Kühl- und die Hydraulikflüssigkeit aus einem gemeinsamen Flüssigkeitsreservoir (22) entnehmbar sind.

25. Elektromotor nach einem der Ansprüche 1 bis 24, **dadurch gekennzeichnet, dass** eine Hydraulikpumpe (6) zur Aufrechterhaltung des zur Kühlung und/oder Schmierung des Elektromotors (1) notwendigen Hydraulikkreislaufes an einer Seite des Elektromotors (1) angeflanscht ist und von diesem angetrieben wird.

26. Elektromotor nach einem der Ansprüche 1 bis 24, **dadurch gekennzeichnet, dass** eine separate Hydraulikpumpe (23) mit einem eigenen Antrieb zur Aufrechterhaltung des zur Kühlung und Schmierung des Elektromotors (1) notwendigen Hydraulikkreislaufes vorgesehen ist.

27. Elektromotor nach einem der Ansprüche 1 bis 26, **dadurch gekennzeichnet, dass** an den Lagerschildern (3) Füße (24) vorgesehen sind, die den Elektromotor (1) und die Hydraulikpumpen (6) tragen und mit welchen der Elektromotor an einer Unterlage befestigbar ist.

28. Verfahren zum Kühlen eines Elektromotors (1) mittels Kühlflüssigkeit, wobei der Elektromotor zumindest eine rotierende Hydraulikpumpe (6) antreibt und die Kühlflüssigkeit durch zumindest einen Hohlraum (5) des Mantels des Motorgehäuses geführt wird, wobei zur Kühlung und Schmierung der Lager (4) des Elektromotors (1) die Kühlflüssigkeit zu den Lagern (4) geführt wird, **dadurch gekennzeichnet, dass** die angeflanschte Hydraulikpumpe (6) gegenüber einem Lagerschildinnenraum (19) flüssigkeitsdicht abgedichtet wird.

29. Verfahren nach Anspruch 28, **dadurch gekennzeichnet, dass** in serieller Weise zuerst ein an einer Stirnseite des Motorgehäuses (2) angebrachter Lagerschild (3), anschließend ein Teil (26) des Mantelhohlraumes (5), anschließend ein an der anderen Stirnseite des Motorgehäuses (2) angebrachter Lagerschild (3) und im Anschluss daran der Rest (27) des Mantelhohlraumes (5) von Kühlflüssigkeit durchströmt wird.

30. Verfahren nach Anspruch 28 oder 29, **dadurch gekennzeichnet, dass** die Kühlflüssigkeit mäanderförmig durch den Mantelhohlraum (5) geführt wird.

## Revendications

1. Moteur électrique (1) refroidi par un liquide, avec un arbre (7) de moteur, deux flasques (3) de palier, agencés chacun, respectivement, sur un côté frontal du carter (2) du moteur et portant chacun au moins un palier (4), dans lequel est logé en rotation l'arbre (7) du moteur, ainsi qu'au moins une pompe hydraulique rotative (6), par exemple une pompe à pistons axiaux, une pompe à pistons radiaux, une pompe rotative à ailettes ou une pompe à engrenages, dont l'arbre d'entraînement est connecté à l'arbre (7) du moteur au moyen d'un couplage (8) et qui est entraînée en rotation par le moteur électrique (1), où la chemise du carter (2) du moteur est réalisée pour être creuse, du moins en partie, et former un compartiment creux (5) de chemise capable de recevoir un liquide de refroidissement, où les flasques (3) des paliers présentent chacun au moins un canal de connexion (11) pour amener le liquide de refroidissement depuis le compartiment creux (5) de la chemise vers les paliers (4), afin de refroidir et lubrifier ces paliers (4), **caractérisé en ce que** la pompe hydraulique (6) fixée par une bride est isolée de manière étanche aux liquides du compartiment interne (19) du flasque du palier.

2. Moteur électrique selon la revendication 1, **caractérisé en ce qu'**au moins une pompe hydraulique rotative (6), par exemple une pompe à pistons axiaux, une pompe à pistons radiaux, une pompe rotative à ailettes ou une pompe à engrenages est solidaire de l'arbre (7) du moteur électrique, sur chaque côté du moteur électrique (1).

3. Moteur électrique selon la revendication 1 ou la revendication 2, **caractérisé en ce que,** sur la partie cylindrique du carter (2) du moteur, on prévoit pour le liquide de refroidissement au moins une ouverture d'entrée ou / et de sortie (13) qui est / sont en communication avec un réservoir (22) de liquide de refroidissement et avec le compartiment creux (5) de la chemise.

4. Moteur électrique selon la revendication 1, la revendication 2 ou la revendication 3, **caractérisé en ce qu**'au moins une ouverture d'entrée ou / et de sortie (15) est prévue / sont prévues pour le liquide de refroidissement, dans au moins un flasque (3) de palier.

5. Moteur électrique selon la revendication 3 ou la revendication 4, **caractérisé en ce qu'**au moins trois canaux de circulation (25, 26, 27) sont prévus pour le fluide de refroidissement dans le compartiment creux (5) de la chemise.

6. Moteur électrique selon la revendication 5, **caractérisé en ce que** les canaux individuels (25, 26, 27) sont disposés l'un à côté de l'autre dans le compartiment creux (5) de la chemise et qu'ils sont séparés l'un de l'autre seulement par des parois de séparation (28), de sorte que l'espace creux (5) de la chemise est parcouru sensiblement en totalité par le liquide de refroidissement.

7. Moteur électrique selon la revendication 5 ou la revendication 6, **caractérisé en ce qu'**au moins un canal de connexion (12) est prévu dans les deux flasques (3) des paliers pour permettre l'évacuation du liquide de refroidissement des paliers (4) vers le compartiment creux (5) de la chemise.

8. Moteur électrique selon la revendication 7, **caractérisé en ce qu'**un premier canal (25) isolé par des parois de séparation (28) et disposé axialement dans le compartiment creux (5) de la chemise, est en communication avec une ouverture de sortie (13) **et en ce que** ce canal (25) est en communication sur un côté du moteur électrique (1) avec les canaux de connexion (11) pour l'alimentation en liquide de refroidissement du flasque (3) de palier correspondant.

9. Moteur électrique selon la revendication 8, **caractérisé en ce qu'**un second canal (26), isolé par des parois de séparation (28), est disposé axialement directement à côté du premier canal séparé (25), **en ce que** ce canal (26) - sur le côté du moteur électrique (1) sur lequel le premier canal (25) débouche dans le flasque de palier - est en communication avec les canaux de connexion (12) pour évacuer le liquide de refroidissement du flasque (3) de palier correspondant et **en ce que** ce canal (26) sur le côté opposé du moteur électrique (1) est en communication avec le canal de connexion (11) assurant l'alimentation en liquide de refroidissement de l'autre flasque (3) de palier correspondant.

10. Moteur électrique selon la revendication 9, **caractérisé en ce que** d'autres canaux axiaux (27), disposés l'un à côté de l'autre, sont connectés en série, **en ce que**, dans au moins un de ces canaux (27), la direction du fluide hydraulique peut être inversée au moyen de chicanes (29), **en ce qu'**un de ces canaux (27) est disposé directement à côté du second canal séparé (26), **en ce que** ce canal (27) est en communication - sur le côté du moteur électrique (1) sur lequel débouche le second canal séparé (26) dans le flasque (3) de palier correspondant - avec les canaux de connexion (12) pour l'évacuation du liquide de refroidissement du flasque (3) de palier correspondant, et **en ce que** le dernier de ces canaux (27) est disposé directement à côté du premier canal séparé (25) en étant en communication avec l'ouverture de sortie (15).

11. Moteur électrique selon l'une des revendications 1 à 10, **caractérisé en ce que** les canaux de refroidissement (25, 26, 27) sont disposés et connectés ensemble de manière à ce que le liquide de refroidissement emprunte un trajet en méandres dans la chemise.

12. Moteur électrique selon l'une des revendications 1 à 11, **caractérisé en ce que** les canaux de refroidissement (25, 26, 27) sont agencés et connectés ensemble de manière à assurer des inversions dans la direction du flux de liquide de refroidissement circulant essentiellement axialement.

13. Moteur électrique selon l'une des revendications 1 à 12, **caractérisé en ce que** les canaux de connexion (11, 12) débouchent dans le compartiment interne (19) du flasque de palier sur le côté du palier (4) éloigné du carter (2) du moteur.

14. Moteur électrique selon l'une des revendications 1 à 13, **caractérisé en ce que** le compartiment interne du carter (2) du moteur, dans lequel sont disposés les enroulements du moteur électrique (1), est isolé de manière étanche au liquide de refroidissement, par une garniture d'étanchéité (10), de préférence par une garniture d'étanchéité sans contact.

15. Moteur électrique selon l'une des revendications 1 à 14, **caractérisé en ce que** le flasque (3) de palier, réalisé d'une pièce, entoure au moins la partie du couplage (8) se trouvant sur l'arbre (7) du moteur et **en ce que** le côté frontal du flasque (3) du palier, éloigné du carter (2) du moteur, présente une bride (18).

16. Moteur électrique selon l'une des revendications 1 à 15, **caractérisé en ce que** le flasque (3) de palier du côté du moteur électrique (1), sur lequel aucune pompe hydraulique (6) n'est montée à l'aide d'une bride, est fermé à l'aide d'une plaque de fermeture étanche aux liquides.

17. Moteur électrique selon l'une des revendications 1 à 16, **caractérisé en ce que** le liquide de refroidissement contient un agent pour diminuer le coefficient de friction.

18. Moteur électrique selon la revendication 17, **caractérisé en ce que** les connexions de couplage (8) entre l'arbre (7) du moteur électrique et l'arbre d'entraînement des pompes hydrauliques (6) et le palier (4) de l'arbre (7) du moteur électrique sont réalisés et disposés de manière à ce qu'ils puissent être lubrifiés par le liquide de refroidissement circulant.

19. Moteur électrique selon l'une des revendications 1 à 18, **caractérisé en ce que** la pompe hydraulique (6) est connectée avec le flasque (3) de palier par un anneau adaptateur (9).

20. Moteur électrique selon l'une des revendications 1 à 19, **caractérisé en ce que** l'anneau adaptateur (9) et les couplages (8) sont interchangeables et peuvent être adaptés à différents types de pompes hydrauliques (6).

21. Moteur électrique selon les revendications 1 à 20, **caractérisé en ce que** les couplages (8) sont réalisés sous la forme de couplages à dents.

22. Moteur électrique selon l'une des revendications 1 à 21, **caractérisé en ce que** l'on prévoit, en amont de l'entrée du compartiment creux (5) de la chemise du carter (2) du moteur, une installation de refroidissement (20) pour le liquide de refroidissement, par exemple, un échangeur thermique huile / eau et, en aval de la sortie du compartiment creux (5) de la chemise, une installation de filtration (21) pour le liquide de refroidissement.

23. Moteur électrique selon les revendications 1 à 22, **caractérisé en ce que** le liquide hydraulique sert, en même temps, de liquide de refroidissement.

24. Moteur électrique selon la revendication 23, **caractérisé en ce que** le liquide hydraulique et le liquide de refroidissement peuvent provenir d'un même réservoir à liquide (22).

25. Moteur électrique selon l'une des revendications 1 à 24, **caractérisé en ce qu'**une pompe hydraulique (6), servant à maintenir la circulation dans le circuit hydraulique nécessaire au refroidissement et / ou à la lubrification du moteur électrique (1), est fixée au moyen d'une bride sur un côté du moteur électrique (1) qui assure l'entraînement de la pompe.

26. Moteur électrique selon l'une des revendications 1 à 24, **caractérisé en ce qu'**une pompe hydraulique séparée (23) avec un entraînement qui lui est propre est prévue, pour assurer la circulation dans le circuit hydraulique nécessaire au refroidissement et à la lubrification du moteur électrique (1).

27. Moteur électrique selon l'une des revendications 1 à 26, **caractérisé en ce que** les flasques (3) des paliers comportent des pieds (24) qui supportent le moteur électrique (1) et les pompes hydrauliques (6) et qui permettent de fixer le moteur électrique sur une base.

28. Procédé pour refroidir un moteur électrique (1) au moyen d'un liquide de refroidissement, où le moteur électrique entraîne au moins une pompe hydraulique rotative (6), où le liquide de refroidissement circule par au moins un compartiment creux (5) de la chemise du carter du moteur, où le liquide de refroidissement circule jusqu'aux paliers (4) pour refroidir et lubrifier les paliers (4) du moteur électrique (1), **caractérisé en ce que** la pompe hydraulique (6) fixée, à l'aide d'une bride, est isolée de manière étanche du compartiment interne (19) du flasque du palier.

29. Procédé selon la revendication 28, **caractérisé en ce que** le liquide de refroidissement circule successivement, d'abord dans un flasque (3) de palier se trouvant sur un côté frontal du carter (2) du moteur, puis dans une partie (26) du compartiment creux (5) de la chemise, puis dans l'autre flasque (3) de palier se trouvant sur l'autre côté frontal du carter (2) du moteur et enfin dans le restant (27) du compartiment creux (5) de la chemise.

30. Procédé selon la revendication 28 ou la revendication 29, **caractérisé en ce que** le liquide de refroidissement emprunte un trajet en méandres dans le compartiment creux (5) de la chemise.

## Claims

1. An electrical motor (1) cooled by a liquid, with a motor shaft (7), two end bearing plates (3), each one respectively on one front side of the motor housing (2) and carrying each one at least one shaft bearing (4), in which is housed rotatably the shaft (7) of the motor, as well as at least one rotatory hydraulic pump (6), for example an axial piston pump, a radial piston pump, a rotatory vane-type pump or a gear-type pump, of which the drive shaft is connected to the shaft (7) of the motor by means of a coupling (8) and which is driven in rotation by the electrical motor (1), the jacket of the motor housing (2) is designed to be hollow, at least partly, and to form a hollow compartment (5) of the jacket capable of receiving a cooling liquid, wherein the end bearing plates (3) are provided each one with at least one connection channel (11) for supplying the cooling liquid from the hollow compartment (5) of the jacket to the shaft bearings (4), in order to cool and lubricate these shaft bearings (4), **characterized in that** the hydraulic pump (6), fixed by a flange, is sealed liquid-tight from the inner compartment (19) of the end bearing plate.

2. An electrical motor according to claim 1, **characterized in that** at least one rotatory hydraulic pump (6), for example an axial piston pump, a radial piston pump, a rotatory vane-type pump or a gear-type pump, is rigidly fixed to the shaft (7) of the electrical motor, on each side of the electrical motor (1).

3. An electrical motor according to claim 1 or 2, **characterized in that** on the cylindrical part of the motor housing (2), there is provided for the cooling liquid at least one inflow opening and / or outflow opening (13) which is in communication with a cooling liquid container (22) and with the hollow compartment (5) of the jacket.

4. An electrical motor according to claim 1, 2 or 3, **characterized in that** at least one inflow and / or outflow opening (15) is provided for the cooling liquid, in at least one end bearing plate (3).

5. An electrical motor according to claim 3 or 4, **characterized in that** at least three flow channels (25, 26, 27) are provided for the cooling fluid in the hollow compartment (5) of the jacket.

6. An electrical motor according to claim 5, **characterized in that the** individual channels (25, 26, 27) are arranged side by side in the hollow compartment (5) of the jacket and **in that** they are separated from each other only by partition walls (28), in such a manner that the cooling liquid flows substantially through the entire hollow compartment (5) of the jacket.

7. An electrical motor according to claim 5 or 6, **characterized in that** at least one connection channel (12) is provided in the two end bearing plates (3) to allow for the evacuation of the cooling liquid from the shaft bearings (4) to the hollow compartment (5) of the jacket.

8. An electrical motor according to claim 7, **characterized in that** a first channel (25), isolated by partition walls (28) and arranged axially in the hollow compartment (5) of the jacket, is in communication with an outflow opening (13) and **in that** this channel (25) is in communication on one side of the electrical motor (1) with the connection channels (11) for supplying cooling liquid to the corresponding end bearing plate (3).

9. An electrical motor according to claim 8, **characterized in that** a second channel (26), isolated by partition walls (28), is arranged axialiy directly alongside the first separate channel (25), **in that** this channel (26) on the side of the electrical motor (1) on which the first channel (25) opens into the end bearing plate (3) is in communication with the connection channels (12) for evacuating the cooling liquid from the corresponding end bearing plate (3) and **in that** this channel (26), on the opposite side of the electrical motor (1) is in communication with the connection channel (11) ensuring the cooling liquid supply to the other corresponding end bearing plate (3).

10. An electrical motor according to claim 9, **characterized in that** other axial channels (27), arranged side by side are series connected, **in that** in at least one of these channels (27) the direction of the hydraulic fluid can be inverted by means of baffles (29), **in that** one of these channels (27) is arranged directly alongside the second separate channel (26), **in that** this channel (27) communicates on the side of the electrical motor (1) on which opens the second separate channel (26) in the corresponding end bearing plate (3) with the connection channels (12) for evacuating the cooling liquid from the corresponding end bearing plate (3) and **in that** the last one of these channels (27) is arranged directly alongside the first separate channel (25) while being in communication with the outflow opening (15).

11. An electrical motor according to one of claims 1 to 10, **characterized in that** the cooling channels (25, 26, 27) are arranged and connected together in such a manner that the cooling liquid follows a meandering path in the jacket.

12. An electrical motor according to one of claims 1 to 11, **characterized in that** the cooling channels (25, 26, 27) are arranged and connected together in such a manner as to insure inversions in the direction of the flow of the cooling liquid circulating substantially axially.

13. An electrical motor according to one of claims 1 to 12, **characterized in that** the connection channels (11, 12) open inside the inner compartment (19) of the end bearing plate on the side of the shaft bearing (4) which is distal with respect to the motor housing (2).

14. An electrical motor according to one of claims 1 to 13, **characterized in that** the inner compartment of the motor housing (2), in which are arranged the windings of the electrical motor (1), is insulated from the cooling liquid, by a seal (10), preferably by a contactless seal.

15. An electrical motor according to one of claims 1 to 14, **characterized in that** the end bearing plate (3), designed as a single piece, surrounds at least the part of the coupling (8) located on the shaft (7) of the motor and **in that** the front side of the end bearing plate (3), which is distal with respect to the motor housing (2), has a flange (18).

16. An electrical motor according to one of claims 1 to 15, **characterized in that** the end bearing plate (3) on the side of the electrical motor (1), on which no hydraulic pump (6) is mounted by means of a flange, is closed liquid-tight by means of a cover plate.

17. An electrical motor according to one of claims 1 to 16, **characterized in that** the cooling liquid contains an agent capable of decreasing the friction coefficient.

18. An electrical motor according to claim 17, **characterized in that** the coupling connections (8) between the shaft (7) of the electrical motor and the drive shaft of the hydraulic pumps (6) and the shaft bearing (4) of the shaft (7) of the electrical motor are designed and arranged so that they may be lubricated by the circulating cooling liquid.

19. An electrical motor according to one of claims 1 to 18, **characterized in that** the hydraulic pump (6) is connected to the end bearing plate (3) by means of an adaptor ring (9).

20. An electrical motor according to one of claims 1 to 19, **characterized in that** the adaptor ring (9) and the couplings (8) are interchangeable and can be adapted to different types of hydraulic pumps (6).

21. An electrical motor according to claims 1 to 20, **characterized in that** the couplings (8) are provided as toothed couplings.

22. An electrical motor according to one of claims 1 to 21, **characterized in that** there is provided, upstream of the inlet of the hollow compartment (5) of the jacket of the motor housing (2), a cooling installation (20) for cooling the liquid, for example an oil / water heat exchanger and, downstream of the outlet of the hollow compartment (5) of the jacket, a filtration installation (21) for the cooling liquid.

23. An electrical motor according to one of claims 1 to 22, **characterized in that** the hydraulic liquid is simultaneously used as cooling liquid.

24. An electrical motor according to claim 23, **characterized in that** the hydraulic liquid and the cooling liquid can be fed from a same liquid container (22).

25. An electrical motor according to one of claims 1 to 24, **characterized in that** a hydraulic pump (6) which functions to maintain the circulation in the hydraulic circuit which is necessary for the cooling and / or the lubrication of the electrical motor (1), is fixed by means of a flange on one side of the electrical motor (1) and is driven by the same.

26. An electrical motor according to one of claims 1 to 24, **characterized in that** a separate hydraulic pump (23) with its own drive means is provided for ensuring the circulation in the hydraulic circuit necessary for the cooling and for the lubrication of the electrical motor (1).

27. An electrical motor according to one of claims 1 to 26, **characterized in that** the end bearing plates (3) include feet (24) which support the electrical motor (1) and the hydraulic pumps (6) and which make it possible to mount the electrical motor on a base.

28. A process for cooling an electrical motor (1) by means of a cooling liquid, wherein the electrical motor drives at least one rotatory hydraulic pump (6), wherein the cooling liquid flows at least through a hollow compartment (5) of the jacket of the motor housing, wherein the cooling liquid flows to the shaft bearing (4) to cool and lubricate the shaft bearing (4) of the electrical motor (1), **characterized in that the** hydraulic pump (6), fixed by a flange, is sealed liquid-tight from the inner compartment (19) of the end bearing plate.

29. A process according to claim 28, **characterized in that** the cooling liquid flows, in succession, first in an end bearing plate (3) located on a front side of the motor housing (2), then in a part (26) of the hollow compartment (5) of the jacket, then in the other end bearing plate (3) located on the other front side of the motor housing (2) and finally in the remainder (27) of the hollow compartment (5) of the jacket.

30. A process according to claim 28 or 29, **characterized in that** the cooling liquid follows a meandering path in the hollow compartment (5) of the jacket.
